# EUROPEAN PATENT APPLICATION

(11) **EP 1 296 500 A1**
(43) Date of publication of application: **26.03.2003**
(21) Application number: 01122340.1
(22) Date of filing: 19.09.2001
(51) Int. Cl.: H04M 1/725

(54) **Mobile emergency call system**

(71) Applicant: Wen Yen Hong, Thomas, 22850 Norderstedt (DE); Kipp, Volker, 32427 Minden (DE); Wain, Derek, 30455 Hannover (DE)
(72) Inventor: Wen Yen Hong, Thomas, 22850 Norderstedt (DE); Kipp, Volker, 32427 Minden (DE); Wain, Derek, 30455 Hannover (DE)
(74) Representative: TER MEER STEINMEISTER & PARTNER GbR

(57) **Abstract**

Mobile emergency call system comprising a portable unit (10) including a mobile telephone module (22), a positioning system (26) and a control system (28) configured to send, in response to an activating command, position data, obtained by the positioning system (26), through the telephone module (28) to at least one predetermined receiver.

## Description

The invention relates to a mobile emergency call system enabling persons in danger to call for help from arbitrary locations. The system may be used for example by children or VIPs who are kidnapped or threatened in any other way, by persons bearing a particular risk of accidents, for example in extreme sports or when working alone in a dangerous environment, or by diseased persons having a high risk of a heart attack or the like.

It is well known that a conventional mobile telephone, e.g. a GSM phone, may be used among others for sending emergency calls. However, considering for example a typical kidnapping scenario, the victim will normally be under constant observation of the kidnapper and will not have the opportunity to operate his or her mobile phone secretly. Even when the dialling procedure is simplified by providing a dedicated button on the mobile phone, so that a pre-programmed number of a call center administering the emergency calls may be dialled automatically by simply pressing the dedicated button, the victim is still required to indicate its current position by voice or key input, and such activities would immediately be noticed by the kidnappers. Similarly, a person injured in an accident may no longer be able to provide the required position information by speaking into the phone.

It is accordingly an object of the invention to provide a mobile emergency call system which permits to send an emergency call with a minimum of noticeable activities and which nevertheless permits the receiver to determine the current position of the caller with sufficient accuracy, so that a rescue team may be instructed appropriately.

According to the invention, this object is achieved by a portable unit including a mobile telephone module, a positioning system and a control system configured to send, in response to an activating command, position data, obtained by the positioning system, through the telephone module to at least one predetermined receiver.

Thus, in an emergency situation, the user may simply enter the activating command, e.g. by pressing a button on the portable unit, and this will cause the control system to automatically determine the current position of the unit by means of the positioning system and to establish a data message including the position data, which will then be sent to the receiver by means of the telephone module. As a result, the position data needed for taking appropriate measures are available on the side of the receiver without any need for further activities on behalf of the user.

More specific optional features of the invention are indicated in the dependent claims.

The telephone module may utilise any suitable mobile telephone standard such as GSM and may be a single, dual or tri-band phone for country, continent or global coverage. It will be understood however that the telephone module is not required to have the full functionality of a mobile telephone. In particular, it doesn't have to and should not have any electro-acoustic transducers nor a key pad for dialling. It may however be provided with a SIM card (Subscriber Identity Module) for storing identity, usage and roaming information, as conventional. The data messages sent and/or received by the telephone module may be in the form of SMS data (Short Message System).

In a preferred embodiment, the positioning system used in the unit according to the invention is the satellite-based GPS system (Global Positioning System) which is operative already in many navigation systems of automotive vehicles and permits to detect the location of the unit with an accuracy in the order of 15m.

The portable unit is preferably accommodated in a shock-proof and water-proof casing with comparatively small dimensions, not larger than a cigarette box, for example, so that it may easily be hidden under the clothes of the user.

A battery pack, preferably a rechargeable battery, accommodated in the casing provides sufficient storage capacity for an operation time of about 60 minutes. When activated, the portable unit will send updated position data to the receiver in regular intervals, for example every 20 seconds, so that it is possible on the side of the receiver to track the movements of the unit, e.g. in case of kidnapping, over a time period long enough to take appropriate counter measures. In order to extend the operation time, the updating intervals may be variable in accordance with the charge condition of the battery.

Preferably, the unit cannot be deactivated, once it has been activated. Thanks to the shock-proof casing, the unit will also be difficult to destroy, so that it is difficult for the assailant to stop the transmission of position data even when he has discovered the unit. In a modified embodiment, the unit may have a fake turn-off switch to make the assailant believe that he has disabled the system.

The receiver may be a GSM phone or a GSM module connected to a personal computer (PC). In the latter case, the PC can provide an updated map indicating the current position of the portable unit. The receiver may be operated by a security service provider who administrates emergency calls of subscribers and who links the position information to the police or other authorities. When a user subscribes to the security service, he buys or rents the portable unit and then pays a monthly fee, for example, for the SIM card. This fee may also include an insurance fee for false alarms.

It is sufficient that the mobile unit provides the position data along with data permitting to identify the subscriber. All other information that may be needed for providing an efficient security service can be stored in a data base of the service provider. These data may include information on the particular risks by which the subscriber is threatened, so that the pertinent authorities can be contacted in case of an emergency call. For example, this information may specify that the subscriber is a child to be protected against kidnapping or rape. Then, the emergency call and the position information will be linked to the police, preferably accompanied by information on the name, address and age of the child and by a digital picture of the child that has been stored previously in the data base of the subscriber. On the other hand, if the subscriber belongs to a risk group "surfer or sailor" for example, then the authority to be contacted will the coast guard, and the information stored by the service provider may include information on the surfboard or boat used by the subscriber. Optionally, information on the risk group may also be stored on the SIM card of the mobile unit and may be transmitted together with the position data.

Depending upon the risk group, the portable unit may optionally be operated in a remote polling mode, in which the unit may be actuated remotely by the service provider or any other person, for example when it is feared that the subscriber may be in life threatening situation and could be unable to activate the unit himself. Remote polling may then be achieved by sending an SMS command message to the portable unit from the service provider or from any ordinary mobile phone (e.g. that of the parents). This message will then instruct the portable unit to send its current position to the pre-programmed phone number or to a phone number which is sent with the command message. However, since the portable unit has to be in an answer mode which incurs a certain power consumption, a larger battery pack may be required. On the other hand, if the unit is configured only for a local alarm mode, i.e. a mode in which the unit can be activated only by pressing a button on the unit itself, the battery pack may be smaller and it may even be possible to incorporate the portable unit the casing of a wrist watch or the like.

An embodiment example of the invention will now be described in conjunction with the drawings in which:
- Fig. 1: is a perspective view of a portable unit; and
- Fig. 2: is a block diagram of electronic components incorporated in the portable unit.

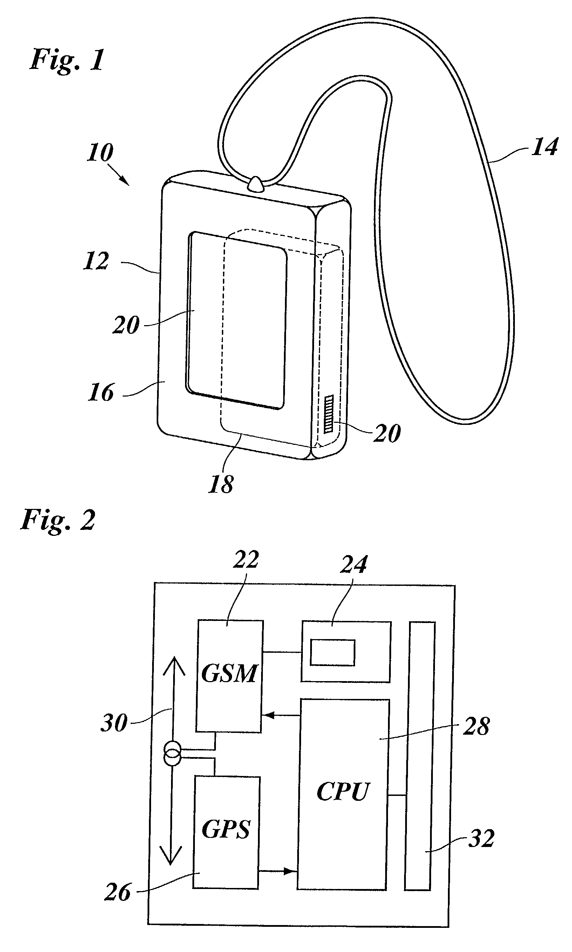

As is shown in figure 1, a portable unit 10 of an emergency call system has a water-proof and shock-resistant casing 12 shaped as a relatively flat box with rounded edges, so that a user may conveniently wear it hidden under his clothes. In the example shown, the casing 12 is fixed to necklace 14, so that the user may wear it round his neck like a money bag, with a main surface 16 of the casing 12 facing outwardly.

The casing 12 accommodates a number of electronic components, which will be described below in conjunction with figure 2, as well as a battery pack 18 powering these electronic components. A plug connector 20 provided in a side face of the casing 12 permits to connect a recharge cable for recharging the battery pack 18 in the same manner as is known for ordinary mobile phones. Optionally, a display unit (not shown) for indicating the charge condition of the battery pack 18 may be provided on the casing 12, but the necessity to recharge the battery pack should preferably not be indicated by any kind of a acoustic alarm signal.

For the purpose of local activation of the portable unit in an emergency situation, a panic button 20 having a comparatively large surface area is arranged on the front surface 16 of the casing 12, so that the panic button may readily be depressed by a user even when the casing 12 is worn under the clothes. The panic button 20 is slightly recessed in the casing 12 so that the risk of an inadvertent activation of the unit is largely eliminated. In order to further reduce this risk, the activation procedure may require that the panic button 20 is depressed repeatedly within a short time interval, or the panic button may be replaced by two separate buttons which have to be depressed in a predetermined sequence.

As is shown in figure 2, the electronic components accommodated in the casing 12 comprise a mobile telephone module (GSM) 22 associated with an exchangeable SIM card 24, a GPS module 26 (global position system) and a microprocessor (CPU) 28 serving as a control system which controls the functions of the telephone module 22 and the GPS module 26.

The telephone module 22 and the GPS module 26 are both connected to an antenna 30 which may be formed by a thin dual purpose disk antenna through which the telephone module can communicate with a nearby GSM transceiver and the GPS module can receive signals from a number of GPS satellites.

In one embodiment, the telephone module 22 includes only the part of the functionality of a mobile telephone that is needed for automatically tuning to an available GSM transceiver and for sending SMS messages to a unique telephone number that has been set in advance.

When the user wants to send an emergency call, he activates the microprocessor 26 by operating the panic button 20. Since the portable unit 10 does not have any facilities for deactivating the microprocessor 28 through a local command, the system will remain in the active state until the capacity of the battery pack 18 becomes exhausted. In the active state, the GPS module 26 is powered to receive the satellite signals through the antenna 30, and the position information provided by the GPS module 26 is interpreted by the microprocessor 28 to determine the current position where the unit 10 is located. On the basis of this information, the microprocessor 28 compiles an SMS message which contains the position data, in the form of UTM coordinates for example, and instructs the telephone module 22 to send this SMS message to the pre-set phone number. This procedure is repeated at regular intervals, for example every 20 seconds, as long as the unit remains active. The message sent to the pre-set telephone number of the receiver will also include identification data encoded on the SIM card 24 for identifying the user. Thus, the receiver to which the message has been sent, is able to identify the user who has sent the emergency call, to determine and monitor the actual position of this user and to call for appropriate help.

In a modified embodiment, the telephone module 22 may also include a receiving section and may originally (before the panic button has been depressed) be in an answer mode in which it is capable of receiving an activation command in the form of an SMS message through the GSM network. In this case, the system may be activated either locally by depressing the panic button 20 or remotely by the command message. The command message may then also include a telephone number to which the position data are to be sent. In this case, it will be possible for example to instruct the unit 10 to send the position data directly to the authority, e.g. a police station, that is in charge of the rescue operation.

The position data provided by the GPS module 26 may be stored or buffered in a local memory associated with the microprocessor 28, so that the timings at which the position data are transmitted to the receiver may be different from the timings at which the position is updated by the GPS module 26. Optionally, the position data and the respective times at which they have been captured may be stored permanently in a local memory of the unit 10. If, for example, the user has been kidnapped and has activated the unit 10, but the telephone module 22 could for any reason not get access to the mobile telephone network, then it will at least be possible to reconstruct the route the kidnappers have taken, when the portable module 10 is found at a later time.

Moreover, if the telephone module 22 fails to get access to the mobile network immediately, the microprocessor 28 will suspend the useless attempts to get access to the network until the GPS module 26 signals that the position of the unit has changed. Thus, a waste of battery power can be avoided.

In the example shown, the unit 10 further includes an electromechanic vibrator 32 that is incorporated in the wall of the casing 12 opposed to the front wall 16, i. e., the wall facing the skin of the user. When the telephone module 22 has connected to the receiver via the mobile network, the CPU 28 activates the vibrator 32 for a short time so as to output a "silent" tactile signal reassuring the user that his emergency call has been sent and received successfully.

While preferred embodiment of the invention have been described above, it will be understood by a person skilled in the art that many modifications are conceivable within the scope of the invention. For example, the positioning system is not limited to a satellite-based system but might also be a positioning system utilizing the signals from several GMS transceivers with overlapping radio coverage.

## Claims

1. Mobile emergency call system comprising a portable unit (10) including a mobile telephone module (22), a positioning system (26) and a control system (28) configured to send, in response to an activating command, position data, obtained by the positioning system (26), through the telephone module (28) to at least one predetermined receiver.

2. System according to claim 1, wherein a SIM card (24) storing a user identification is associated with the mobile telephone module (22).

3. System according to claim 1 or 2, wherein the positioning system (26) is a satellite-based global positioning system (GPS).

4. System according to any of the preceding claims, wherein the portable unit (10) has a casing (12) provided with a button (20) for inputting the activating command.

5. System according to claim 4, wherein the control system (28) is configured to transmit, once it has been activated, updated position data repeatedly until the capacity of a battery (18) powering the system becomes exhausted.

6. System according to any of the preceding claims, wherein the battery (18) has sufficient storage capacity for an operating time of the system of at least 45 minutes in the active mode.

7. System according to any of the preceding claims, wherein the control system (28) is configured to operate the telephone module (22) initially, before an activating command has been input, in an answer mode in which it is capable of receiving a remote activating command.

8. System according to claim 7, wherein the activating command includes a telephone number and the telephone module (22) and the control system (28) are configured to send the position data to this telephone number.

9. System according to any of the preceding claims, wherein the telephone module (22) is configured to send and receive data, including the position data, in an SMS format.

10. System according to any of the preceding claims, wherein the portable unit comprises a vibrator (32) outputting a non-audible confirmation signal when the emergency call has been sent successfully.
